# FASCICULE DE BREVET EUROPEEN

(11) **EP 1 347 181 B1**
(45) Date de publication et mention de la délivrance du brevet: **01.06.2005**
(21) Numéro de dépôt: 03354024.6
(22) Date de dépôt: 14.03.2003
(51) Int. Cl.: F16B 5/06

(54) **Elément d'assemblage pour la fixation et la continuité électrique de deux pièces métalliques**
Verbindungselement zum Fixieren von zwei metallischen Bauteilen mit elektrischem Durchgang
Connecting element for fixing two metal parts with electrical continuity

(30) Priorité: 22.03.2002 FR 0203634
(43) Date de publication de la demande: 24.09.2003
(73) Titulaire: Bollhoff Otalu S.A., 73490 La Ravoire (FR)
(72) Inventeur: Guillaud, Emmanuelle, 73000 Barberaz (FR); Delaunay, Frédéric, 73000 Barberaz (FR)
(74) Mandataire: Hecké, Gérard

(56) Documents cités:
- EP-A- 0 785 327
- DE-U- 9 415 904
- GB-A- 829 128
- US-A- 4 153 284
- US-B1- 6 338 649

## Description

### Domaine technique de l'invention

L'invention est relative à un élément d'assemblage pour la fixation de deux pièces métalliques comprenant un pion de serrage équipé de moyens de verrouillage susceptibles d'occuper une position de blocage et une position de déblocage par actionnement du pion en rotation un plot, solidaire du fût assurant la fixation mécanique des deux pièces dans la position de blocage, tel que divulgue dans le document GB 829, 128.

### Etat de la technique

L'assemblage de deux pièces métalliques s'effectue d'une manière classique au moyen de boulons, ou de vis autotaraudeuses.

L'utilisation de boulons nécessite deux organes distincts constitués par une vis et un écrou, ce dernier étant positionné manuellement ou par clipsage en regard d'un trou de la deuxième pièce, suivi de l'introduction de la vis à travers un trou aligné de la première pièce. Le verrouillage des deux pièces pour garantir le serrage est généralement assuré par une rondelle élastique ou à picots, laquelle est insérée entre la tête de vis et la première pièce. Le temps de montage et de manipulation pour réaliser un tel assemblage est relativement long, notamment lorsque les dimensions des pièces nécessitent plusieurs boulons. Il en est de même pour l'opération de démontage. D'autre part, la continuité électrique entre deux pièces métalliques revêtues d'une couche de peinture, implique la mise en place d'un conducteur de liaison additionnel, dont les extrémités opposées sont soit fixées, soit enfichées dans des connecteurs des deux pièces.

L'utilisation de vis autotaraudeuses ne permet pas d'obtenir un verrouillage positif entre les deux pièces à assembler. Le remplacement des vis autotaraudeuses est d'autre part obligatoire après chaque démontage.

### Objet de l'invention

L'objet de l'invention consiste à réaliser un élément d'assemblage fiable pour assurer à la fois la fixation mécanique et la continuité électrique de deux pièces, tout en réduisant les temps de montage et de démontage.

Le dispositif selon l'invention est caractérisé en ce que les moyens de verrouillage comportent également:
- un cavalier en forme d'agrafe élastique insérée entre la tête et le plot du pion ledit cavalier étant formé par une bande de métal découpée et pliée en U de manière à enfourcher le fût du pion en assurant la continuité électrique des deux pièces dans la position de blocage, et la séparation desdites pièces lors du déblocage,
- et des moyens d'indexage pour délimiter la course angulaire du pion entre les deux positions de blocage et de déblocage.

Selon un mode de réalisation préférentiel de l'invention, le plot possède une forme non cylindrique constituant une partie monobloc de la vis, et le cavalier est composé d'une partie inférieure équipée d'ergots, et d'une partie supérieure munie d'ailettes élastiques à extrémités pointues.

Selon une caractéristique de l'invention, les ailettes externes de la partie supérieure du cavalier encadrent des languettes internes, lesquelles délimitent avec la partie inférieure, un orifice de passage du fût du pion pour la rendre imperdable.

Selon une autre caractéristique de l'invention, les moyens d'indexage comportent une protubérance solidaire du cavalier, et une encoche ménagée dans la tête du pion, la longueur de ladite encoche correspondant à la course d'actionnement entre la position de blocage et la position de déblocage.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue en coupe partielle de la première pièce métallique équipée de l'élément d'assemblage selon l'invention avant le montage sur la deuxième pièces métallique ;
- la figure 2 montre une vue identique de la figure 1 après le montage sur la deuxième pièce ;

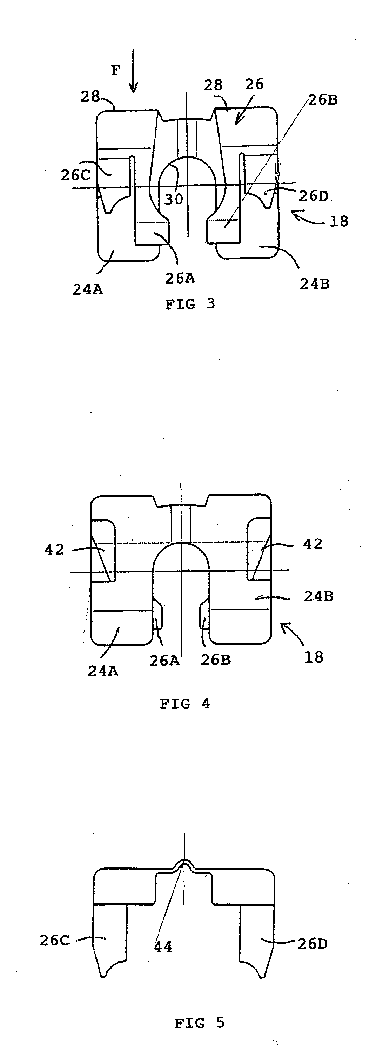

- les figures 3 et 4 représentent respectivement une vue de dessus et une vue de dessous du cavalier de l'élément d'assemblage ;
- la figure 5 est une vue du cavalier selon la flèche F de la figure 3 ;
- les figures 6 et 7 représentent des vues en plan de la figure 2, respectivement en position de déblocage et en position de blocage des deux pièces ;
- les figures 8 et 9 montrent des vues schématiques des moyens d'indexage, respectivement en position de déblocage et en position de blocage de la tête du pion;

### Description d'un mode de réalisation préférentiel.

En référence aux figures, un élément d'assemblage 10 de deux pièces 12, 14 métalliques, est composé d'un pion de serrage 16 et d'un cavalier 18 en forme d'agrafe élastique pour assurer à la fois la fixation mécanique et la continuité électrique des deux pièces 12, 14, ainsi que la séparation des pièces lors du déverrouillage.

Le pion de serrage 16 comporte une tête d'actionnement 20 cylindrique dotée d'une empreinte 22 pour l'introduction d'un tournevis. A l'opposé de la tête 20 se trouve un plot 23 rectangulaire solidarisé au fût 25 cylindrique du pion 16. Le pion 16 et le plot forment un ensemble monobloc constitué par une pièce injectée, notamment métallique ou plastique.

Il est clair que la vis 16 peut aussi être réalisée par d'autres procédés.

Le cavalier 18 est formé par une bande de métal conducteur, convenab(ement découpée et pliée selon une agrafe destinée à enfourcher le fût 25 du pion 16. La partie inférieure 24 du cavalier 18 est conformée en U dont les deux branches 24A, 24B parallèles sont reliées à la partie supérieure 26 par une paire d'épingles 28 recourbées sur elles-mêmes pour constituer un ressort double conducteur.

La partie supérieure 26 et la partie inférieure 24 sont superposées avec interposition d'un intervalle axial permettant la mise en place du cavalier 18 sur la première pièce 12. Un orifice 30 est agencé dans la partie centrale du cavalier 18 pour le passage du fût 25 cylindrique du pion de serrage 16.

La première pièce 12 est constituée par un plastron métallique ayant une face plane 32 et deux extrémités recourbées en U, dont une seule est représentée avec le numéro de référence 34. Chaque extrémité en U de la première pièce 12 comporte une pluralité de trous 36, 38 échelonnés à intervalles réguliers le long des deux ailes parallèles. La tête 20 de chaque pion 16 est logée dans l'ouverture du U de manière à placer l'empreinte 22 en face du trou 36, et à autoriser le passage du fût 25 dans le trou 38 disposé en regard.

La deuxième pièce 14 comprend un profilé métallique percé par une pluralité d'orifices 40 rectangulaires, dont le pas d'écartement correspond à celui des rangées de trous 36, 38 de la première pièce 12.

Les faces internes des deux branches 24A, 24B de la partie inférieure 24 du cavalier 18 comportent des ergots 42 destinés à rayer la peinture superficielle de la première pièce 12 pour assurer la continuité électrique.

La partie supérieure 26 du cavalier 18 est équipée d'une paire de languettes 26A, 26B internes, et d'une paire d'ailettes 26C, 26D externes élastiques. Les languettes 26A, 26B internes sont agencées autour de l'orifice 30 pour rendre le pion 16 imperdable, tandis que les ailettes 26C, 26D externes possèdent des extrémités pointues destinées à s'incruster dans la deuxième pièce 14 pour assurer la continuité électrique avec la première pièce 12. Les ailettes 26C, 26D à déformation élastique assurent également la séparation des pièces 12, 14 lors du déverrouillage.

Des moyens d'indexage délimitent la course angulaire du pion 16 entre les deux positions de blocage et de déblocage. Le cavalier 18 comporte à cet effet une protubérance 44 susceptible de coopérer avec une encoche 46 ménagée dans la tête 20 du pion 16. La longueur de l'encoche 46 correspond à la course angulaire précitée. Il est clair que la position relative de la protubérance 44 et de l'encoche 46 peut être inversée.

La fixation des deux pièces 12, 14 métalliques au moyen de l'élément d'assemblage 10 s'effectue de la manière suivante :

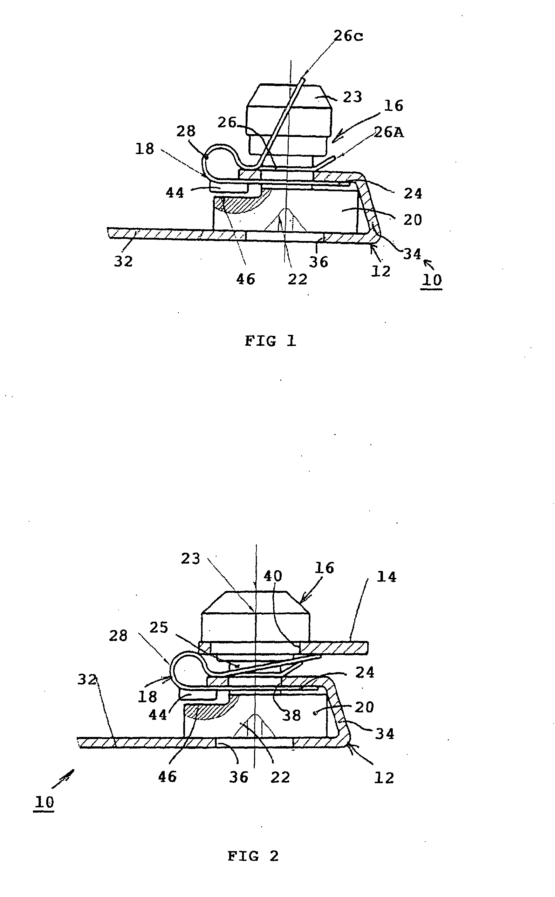

Sur la figure 1, le cavalier 18 est enfourché sur le fût du pion 16, de manière à former un seul composant dans lequel le pion 16 est maintenu par les languettes 26A, 26B internes. On engage ensuite la tête 20 du pion dans l'ouverture en U avec insertion du cavalier 18 sur l'extrémité de la première pièce 12. Les ailettes 26C, 26D externes du cavalier 18 sont relevées vers le haut par rapport aux languettes 26A, 26B. L'ensemble pion 16 et cavalier 18 se trouve ainsi prémonté et clipsé sur la première pièce 12.

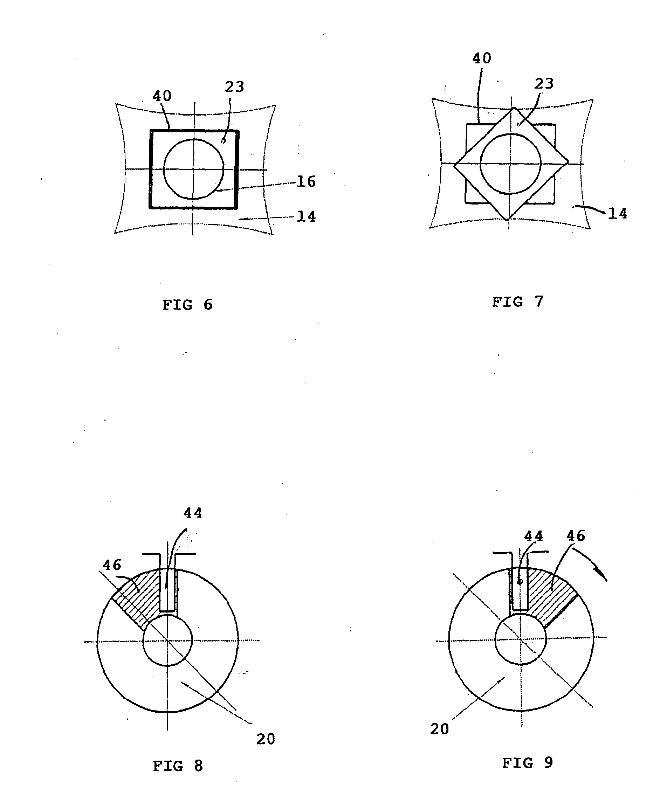

Sur la figure 2, on positionne la première pièce 12 en regard de la deuxième pièce 14 en introduisant le plot 23 dans l'orifice 40 rectangulaire, tel que représenté à figure 6. Le pion 16 se trouve à cet instant en position de déblocage, et la protubérance 44 est en butée contre une extrémité de l'encoche 46 (figure 8).

Le passage de la position de déblocage (figure 8) vers la position de blocage (figures 7 et 9) est opéré par actionnement de 45° du pion 16 grâce à un tournevis introduit dans l'empreinte 22 de la tête 20 à travers le trou 36. La protubérance 44 vient en butée contre l'extrémité opposée de l'encoche 46, et la rotation de 1/8 de tour déplace le plot 23 rectangulaire par rapport à orifice 40 en assurant le verrouillage des deux pièces 12, 14. L'action de vissage vers la position de blocage entraîne la mise en tension de l'assemblage suite au pliage des ailettes 26C, 26D.

Il est clair que la valeur de l'angle de déplacement du pion 16 peut être inférieur ou supérieur à 45°.

Les extrémités pointues des ailettes 26C, 26D externes du cavalier 18 s'incrustent dans la deuxième pièce 14, tandis que les ergots 42 frottent contre la première pièce 12 de manière à assurer une continuité électrique permanente entre les deux pièces métalliques. L'action d'incrustation des ergots 42 et des ailettes 26C, 26D provoque l'enlèvement ou la rayure de la peinture pour fiabiliser le contact électrique avec le métal.

Le démontage de l'élément d'assemblage 10 est opéré en tournant le pion 16 en sens inverse de l'opération de montage. On revient ainsi à la position de déblocage des figures 6 et 8, dans laquelle intervient le déclipsage de la première pièce 12 par rapport à la deuxième pièce 14. La détente des ailettes 26C, 26D élastiques vers la position relevée de la figure 1 facilite l'écartement des pièces 12, 14.

L'élément d'assemblage 10 peut être utilisé pour toute application nécessitant une fonction combinée de fixation mécanique et de continuité électrique entre deux pièces métalliques.

A titre d'exemple pour une armoire électrique, la première pièce 12 peut être un plastron sur lequel sont rapportés des appareils électriques de distribution d'énergie électrique. La deuxième pièce 14 est constituée par au moins un montant de l'ossature du châssis fixe. En fonction de la hauteur du plastron, on peut utiliser plusieurs pions 16. Les cavaliers 18 assurent la continuité de la masse entre le plastron et le châssis, ce qui simplifie le raccordement électrique interne de l'amoire, et augmente la sécurité des personnes.

## Revendications

1. Elément d'assemblage pour la fixation rapide de deux pièces métalliques (12, 14), comprenant un pion de serrage (16) équipé de moyens de verrouillage susceptibles d'occuper une position de blocage et une position de déblocage par actionnement du pion en rotation, un plot (23) solidaire du fût (25) du pion (16) assurant la fixation mécanique des deux pièces (12, 14) dans la position de blocage, **caractérisé en ce que** les moyens de verrouillage comportent également:
- un cavalier (18) en forme d'agrafe élastique insérée entre la tête (20) et le plot (23) du pion (16), ledit cavalier étant formé par une bande de métal découpée et pliée en U de manière à enfourcher le fût (25) du pion (16) en assurant la continuité électrique des deux pièces (12, 14) dans la position de blocage, et la séparation desdites pièces lors du déblocage,
- et des moyens d'indexage pour délimiter la course angulaire du pion (16) entre les deux positions de blocage et de déblocage.

2. Elément d'assemblage selon la revendication 1, **caractérisé en ce que** le plot (23) possède une forme non cylindrique constituant une partie monobloc du pion (16).

3. Elément d'assemblage selon la revendication 1, **caractérisé en ce que** le cavalier (18) est composé d'une partie inférieure (24) équipée d'ergots (42), et d'une partie supérieure (26) munie d'ailettes (26C, 26D) élastiques à extrémités pointues.

4. Elément d'assemblage selon la revendication 3, **caractérisé en ce que** les ailettes (26C, 26D) externes de la partie supérieure (26) du cavalier (18) encadrent des languettes (26A, 26B) internes, lesquelles délimitent avec la partie inférieure (24), un orifice (30) de passage du fût (25) du pion (16) pour la rendre imperdable.

5. Elément d'assemblage selon la revendication 1, **caractérisé en ce que** les moyens d'indexage comportent une protubérance (44) solidaire du cavalier (18), et une encoche (46) ménagée dans la tête (20) du pion (16), la longueur de ladite encoche correspondant à la course d'actionnement entre la position de blocage et la position de déblocage.

6. Elément d'assemblage selon l'une des revendications précédentes, **caractérisé en ce que** le pion (16) est en matière plastique.

7. Elément d'assemblage selon l'une des revendications précédentes 1 à 5, **caractérisé en ce que** le pion (16) est réalisée en alliage métallique.

8. Dispositif de fixation de deux pièces métalliques (12, 14) faisant usage de l'élément d'assemblage (10) selon l'une quelconque des revendications précédentes.

## Patentansprüche

1. Verbindungselement zur Schnellverbindung zweier Metallteile (12, 14), das einen Spannbolzen (16) umfasst, der mit Verriegelungsmitteln versehen ist, die geeignet sind, eine Verriegelungs- und eine Entriegelungsposition einzunehmen, und zwar durch drehende Betätigung des Bolzens, wobei ein Kontakt (23), der fest mit dem Schaft (25) des Bolzens (16) verbunden ist, die mechanische Befestigung beider Teile (12, 14) in der Verriegelungsposition sicherstellt,
**dadurch gekennzeichnet, dass** die Verriegelungsmittel ferner umfassen:
- eine Drahtbrücke (18) in Form einer elastischen Klammer, die zwischen den Kopf (20) und den Kontakt (23) des Bolzens (16) geschoben ist, wobei die Drahtbrücke von einem U-förmig zugeschnittenen Metallstreifen gebildet wird, um den Schaft (25) des Bolzens (16) gabelförmig zu umfassen und so den Stromfluss zwischen den beiden Teilen (12, 14) in Verriegelungsposition und deren Trennung bei der Entriegelung sicherstellt,
- sowie Indexierungsmittel zur Begrenzung des Winkelhubs des Bolzens (16) zwischen der Verriegelungs- und Entriegelungsposition.

2. Verbindungselement nach Anspruch 1, **dadurch gekennzeichnet, dass** der Kontakt (23) eine nicht zylindrische Form hat, die einen einstückigen Teil des Bolzens (16) bildet.

3. Verbindungselement nach Anspruch 1, **dadurch gekennzeichnet, dass** die Drahtbrücke (18) einen unteren, mit Nocken (42) versehenen Teil (24) und einen oberen Teil (26) umfasst, der mit elastischen Stegen (26C, 26D) mit spitzen Enden versehen ist.

4. Verbindungselement nach Anspruch 3, **dadurch gekennzeichnet, dass** die externen Stege (26C, 26D) des oberen Teils (26) der Drahtbrücke (18) Innenlaschen (26A, 26B) umschließen, die mit dem unteren Teil (24) eine Öffnung (30) zur Durchführung des Schafts (25) des Bolzens (16) bildet, damit der Bolzen nicht verloren gehen kann.

5. Verbindungselement nach Anspruch 1, **dadurch gekennzeichnet, dass** die Indexierungsmittel eine Protuberanz (44) umfassen, die fest mit der Drahtbrücke (18) verbunden ist, sowie eine Kerbe (46), die im Kopf (20) des Bolzens (16) vorgesehen ist, wobei die Länge der Kerbe dem Betätigungshub zwischen der Ver- und Entriegelungsposition entspricht.

6. Verbindungsvorrichtung nach einem der vorstehenden Ansprüche, **dadurch gekennzeichnet, dass** der Bolzen (16) aus Kunststoff gefertigt ist.

7. Verbindungsvorrichtung nach einem der vorstehenden Ansprüche, **dadurch gekennzeichnet, dass** der Bolzen (16) aus einer Metalllegierung gefertigt ist.

8. Verbindungsvorrichtung für zwei Metallteile (12, 14), bei der das Verbindungselement (10) nach einem der vorstehenden Ansprüche verwendet wird.

## Claims

1. Assembly element for quick fixing of two metal parts (12, 14), comprising a securing pin (16) equipped with locking means able to occupy a blocked position and a released position by actuation of the pin in rotation, a stud (23) integral to the shank (25) of the pin (16) performing mechanical fixing of the two parts (12, 14) in the blocked position,
**characterized in that** the locking means also comprise:
- a jumper (18) in the form of a flexible clasp inserted between the head (20) and the stud (23) of the pin (16), said jumper being formed by a metal strip cut and folded into a U shape so as to straddle the shank (25) of the pin (16) ensuring electrical continuity of the two parts (12, 14) in the blocked position and separation of said parts when releasing takes place,
- and indexing means to confine the angular travel of the pin (16) between the two blocked and released positions.

2. Assembly element according to claim 1, **characterized in that** the stud (23) has a non-cylindrical shape constituting a monoblock part of the pin (16).

3. Assembly element according to claim 1, **characterized in that** the jumper (18) is composed of a bottom part (24) equipped with fins (42) and of a top part (26) equipped with flexible wings (26C, 26D) with pointed ends.

4. Assembly element according to claim 3, **characterized in that** the external wings (26C, 26D) of the top part (26) of the jumper (18) surround internal tabs (26A, 26B) that confine with the bottom part (24) an opening (30) for the shank (25) of the pin (16) to pass through to render the latter captive.

5. Assembly element according to claim 1, **characterized in that** the indexing means comprise a protuberance (44) integral to the jumper (18), and a notch (46) arranged in the head (20) of the pin (16), the length of said notch corresponding to the actuating travel between the blocked position and the released position.

6. Assembly element according to one of the foregoing claims, **characterized in that** the pin (16) is made of plastic material.

7. Assembly element according to one of the foregoing claims 1 to 5, **characterized in that** the pin (16) is made of metal alloy.

8. Fixing device for fixing two metal parts (12, 14) making use of the assembly element (10) according to any one of the foregoing claims.
